# EUROPEAN PATENT APPLICATION

(11) **EP 1 327 561 A1**
(43) Date of publication of application: **16.07.2003**
(21) Application number: 02080331.8
(22) Date of filing: 17.12.2002
(51) Int. Cl.: B60R 3/00

(54) **Door ladder for motor vehicles**

(30) Priority: 09.01.2002 BE 200200011
(71) Applicant: Claeys, Guy Pierre, 2300 Turnhout (BE)
(72) Inventor: Claeys, Guy Pierre, 2300 Turnhout (BE)
(74) Representative: Donné, Eddy

(57) **Abstract**

Door ladder for motor vehicles.

Ladder for motor vehicle, characterized in that it consists of a provision or ladder (3) in the hollow interior of a car door (4).

## Description

The present invention relates to a door ladder for a motor vehicle, more particularly a ladder which is intended to facilitate the loading and unloading of so-called roof boxes, the access to baggage carriers, bicycle carriers and the like.

It is known that frequently, roof boxes are provided on vehicles, more particularly on cars intended substantially, but not exclusively, for passenger transport, in order to transport longer or large objects, which normally can not be provided in the interior of such car, more particularly ski's, fishing rods, bicycles and the like, on one hand, and in order to form an additional baggage space, on the other hand.

It is also known that gaining access to such roof box or such is not always simple, as those are provided rather high on top of baggage carriers, that, for putting products into such box, removing them therefrom, respectively, or to place suitcases, bicycles or the like on a carrier or remove them therefrom, use is made of the door sills of the motor vehicle concerned, upon which one will step in order to thereby be farther from the ground and to be able to reach above the vehicle.

In this manner, not only very often the door sills, which, in some vehicles, are realized very nice, will become damaged, however, at the same time very often the interior of the car will become dirty, too.

Moreover, the height of these door sills still is not sufficient for people of an average size.

Therefore, the present invention relates to means which allow to reach, in a very simple manner, a higher height in respect to the ground level and therefore to be able to gain an easier access to said roof box or carrier over the entire length in order to load, unload, respectively, the latter.

To this aim, the present invention relates to a ladder for a motor vehicle consisting in a provision or ladder in a car door.

In a particular form of embodiment, this ladder consists of a compartmentation consisting of at least two spaces in the hollow interior of the car door.

Preferably, these spaces will be provided with steps in the form of a reinforced upstanding edge and possibly, additionally of flaps serving as steps.

With the intention of better showing the characteristics of the invention, hereafter, as an example without any limitative character, several preferred forms of embodiment of a door ladder for motor vehicles are described, with reference to the accompanying drawings, wherein:
Figure 1 represents a car with roof box, whereby a door ladder according to the invention is applied;
figure 2 represents a view according to arrow F2 in figure 1;
figure 3, at a larger scale, represents a cross-section according to line III-III in figure 2;
figures 4, 5 and 6 are views similar to that of figure 3, however, for embodiment variants;
figure 7 is a view similar to that of figure 2, whereby, however, the door concerned is reinforced.

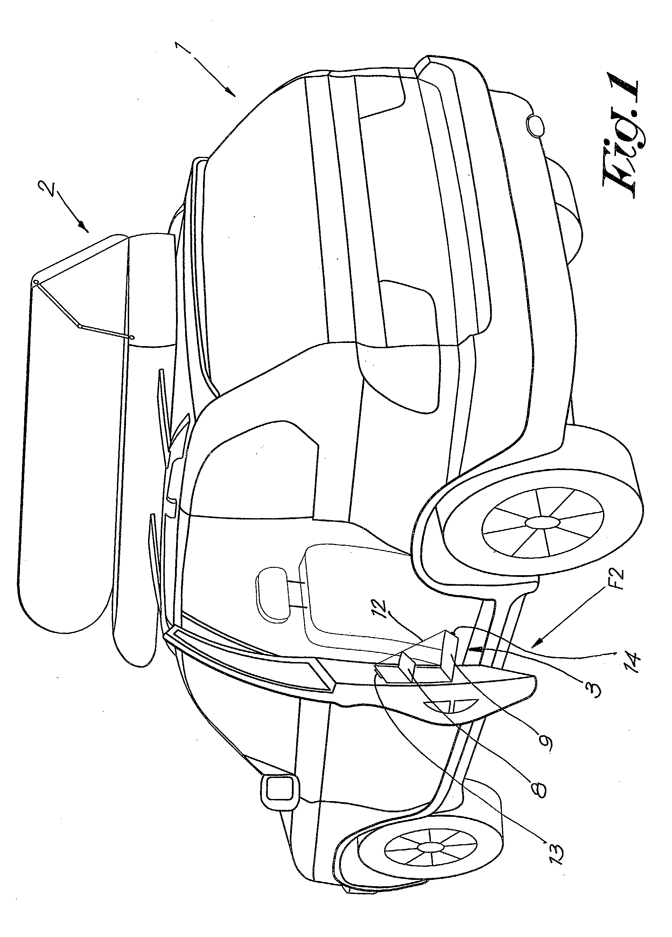

In figure 1, a car 1 is represented, on top of which, in an appropriate, generally known manner, a roof box 2 is provided.

According to the present invention, in at least one of the doors, for example, the rear door, a provision is provided, more particularly, a ladder 3, which can be used when it is necessary to put products into the roof box 2, remove them therefrom, respectively.

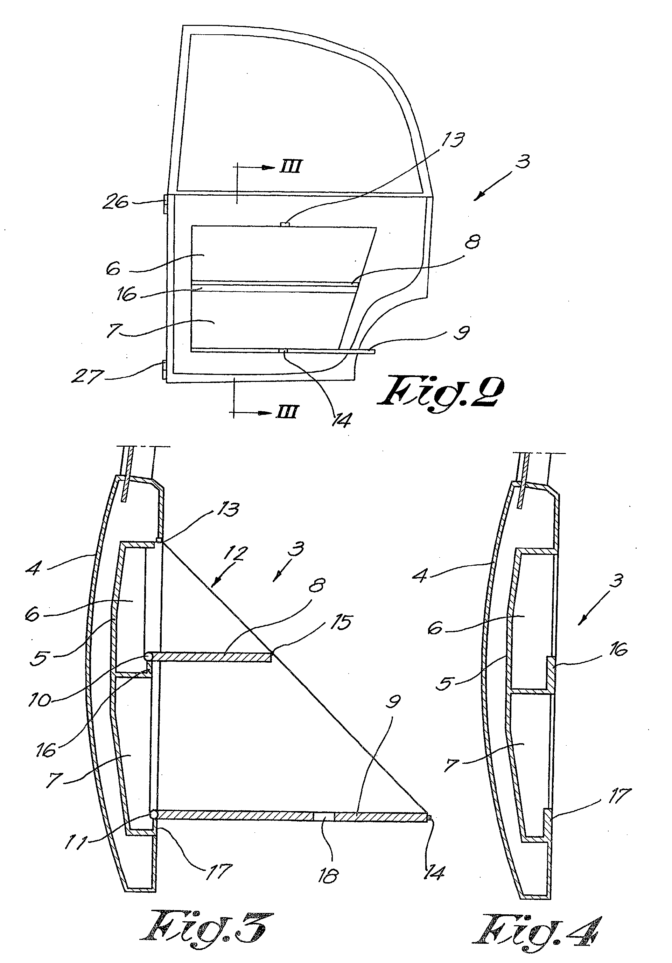

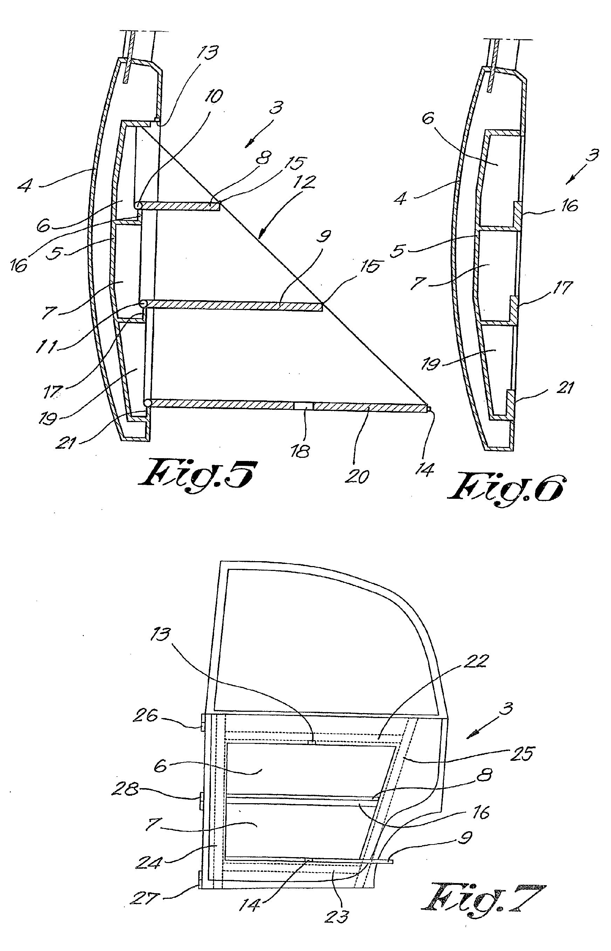

As further represented in figures 2 and 3, the provision or ladder 3 substantially consists in that, in the hollow interior of a door 4, an additional compartmentation 5 is provided, consisting of two spaces, 6 and 7, respectively, whereby each space, in this case, can be closed off by means of a flap, 8 and 9, respectively, and whereby the flap 9 can be placed over the flap 8.

Each flap 8 and 9 hinges around a pivot, 10 and 11, respectively, and preferably is supported by means of one or more cables 12, one extremity 13 of which is attached to the door construction, whereas the second extremity 14 is connected to the flap 9, and the flap 8, at a suitable intermediate point 15, also is connected to the cable 12.

Finally, the compartmentation 5 preferably is provided with an upstanding edge, 16 and 17, respectively, on which the flaps 8 and 9 rest in opened condition.

It is clear that in this manner, a construction is obtained in which the spaces 6 and 7 not only can be used as storage spaces, but whereby the flaps 8 and 9, after having been opened, usually with an opened door 4, can function as a step in order to reach the roof box 2, and whereby these flaps 8 and 9 are not only supported in the hinges 10 and 11, but also on the supports 16 and 17 and at their free extremity, by means of the cable 12.

Preferably, also an opening 18 will be provided at least in the flap 9, with which the flap can be opened.

Of course, means can be provided for immobilizing the flaps 8 and 9 in their closed condition, such that an undesired loosening thereof is totally excluded.

In figure 4, a compartmentation 5 is provided which also forms compartments 6 and 7, whereby, in this case, said supports 16 and 17 are realized very solid in order to be able as such to function as steps.

In figure 5, a variant is represented, whereby also use is made of a compartmentation 5, which, however, in this case forms three compartments, 6, 7 and 19, respectively, whereby, in the same manner as in the embodiment according to figure 3, three flaps are provided, 8, 9 and 20, respectively, which are connected to said cable 12.

In figure 6, an embodiment is represented which is derived from the embodiment according to figure 4, whereby, however, in this case, three steps are provided, 16, 17 and 21, respectively.

Finally, in figure 7 it is represented that, if necessary, such door 4 can be reinforced in a suitable manner by additional beams 22 and 23 and additional posts, 24 and 25, on one hand, and, if necessary, by suspending the door 4 not only by means of the classic hinges 26 and 27, but also by means of an additional hinge 28.

In the aforementioned description, always cables 12 are used. However, it is clear that these cables 12 can be replaced by gas-pressure springs or such or by utilizing spring-biased hinges 10-11, and so on.

In this manner, a door ladder is obtained which is always accessible, without losing storage space and without this ladder causing any losses of space in the vehicle.

Of course, such door ladder can be applied on any vehicle.

It is clear that the present invention is in no way limited to the embodiments described as an example and represented in the accompanying drawings; on the contrary, such door ladder can be realized in various forms and dimensions, without leaving the scope of the invention.

## Claims

1. Ladder for motor vehicle, **characterized in that** it consists of a provision or ladder (3) in the hollow interior of a car door (4).

2. Ladder according to claim 1, **characterized in that** it is formed by a compartmentation (5) in the hollow interior of the car door (4), whereby this compartmentation consists of at least two spaces (6-7).

3. Ladder according to claim 2, **characterized in that** each space (6-7) is bordered by an upstanding edge (16-17).

4. Ladder according to claim 3, **characterized in that** the upstanding edges (16-17) are reinforced.

5. Ladder according to any of the preceding claims, **characterized in that** each space (16-17) can be closed off by a flap (8-9).

6. Ladder according to claim 5, **characterized in that** each flap can hinge around a pivot (10-11) which is attached in the car door (4).

7. Ladder according to claim 6, **characterized in that** the pivots (10-11) are formed by spring-biased hinges.

8. Ladder according to claim 6 or 7, **characterized in that** each flap (8-9) rests upon an upstanding edge (16-17), on one hand, and is suspended, at its free extremity, at a cable (12) attached at its upper free end to the car door (4).

9. Ladder according to claim 6 or 7, **characterized in that** each flap (8-9) rests upon an upstanding edge (16-17), on one hand, and is suspended, at its free extremity, at a gas-pressure spring which, at its upper free extremity, is attached to the car door (4).

10. Ladder according to any of the preceding claims, **characterized in that** around the compartmentation (5), a reinforcement is provided in the form of beams (22-23) and posts (24-25).

11. Ladder according to any of the preceding claims, **characterized in that** the car door (4) is provided with a third hinge (28).
